# EUROPEAN PATENT SPECIFICATION

(11) **EP 3 062 494 B1**
(45) Date of publication and mention of the grant of the patent: **25.12.2019**
(21) Application number: 16157413.2
(22) Date of filing: 25.02.2016
(51) Int. Cl.: H04M 1/57, H04M 1/725

(54) **ELECTRONIC DEVICE AND TELEPHONE NUMBER MATCHING DETERMINATION METHOD**
ELEKTRONISCHE VORRICHTUNG UND TELEFONNUMMERÜBEREINSTIMMUNGSBESTIMMUNGSVERFAHREN
DISPOSITIF ÉLECTRONIQUE ET PROCÉDÉ DE DÉTERMINATION DE CORRESPONDANCE DE NUMÉRO DE TÉLÉPHONE

(30) Priority: 27.02.2015 JP 2015038278
(43) Date of publication of application: 31.08.2016
(73) Proprietor: Alpine Electronics, Inc., Tokyo (JP)
(72) Inventor: Watanabe, Hiromi, Fukushima (JP)
(74) Representative: Schmitt-Nilson Schraud Waibel Wohlfrom Patentanwälte Partnerschaft mbB

(56) References cited:
- US-A1- 2003 169 861
- US-A1- 2005 086 225
- US-A1- 2008 292 078
- US-B1- 7 200 211

## Description

The present invention relates to an electronic device and a telephone number matching determination method that display predetermined information associated with a registered telephone number in conjunction with an incoming telephone number, when the registered telephone number registered on a telephone directory and the incoming telephone number are matched with each other.

In audio visual (AV) apparatuses (including an in-vehicle apparatus) connected to a telephone to be communicatable by wired communication or near field communication, when an incoming telephone number and telephone numbers registered on a telephone directory stored in a storage unit are compared and a matched telephone phone is registered, the incoming telephone number and information such as a full name and a name registered in association with the registered telephone number are displayed on a display screen, such as a display, in conjunction with the incoming telephone number.

However, when an incoming telephone call is an international telephone call, in an incoming telephone number, an international number (such as a country number, an international telephone identification number, and an international telephone company number) is automatically added to a head of an original telephone number and "0 (zero)" of a head of a long-distance number in the original telephone number is removed. For this reason, it is difficult to determine matching/mismatching by comparison of the incoming telephone number of the international telephone call and a registered telephone number registered on the telephone directory. For example, with respect to a telephone number "0246 36 4111" registered on the telephone directory, an incoming telephone number in an international telephone call is displayed as "010 39 246 36 4111" after "0 (zero)" of a head of a long-distance number is removed and an international number is added to the head. For this reason, it is difficult to determine matching with an original registered telephone number.

Therefore, a telephone number determination device and a telephone number determination method that compare telephone numbers from ends of the numbers and select a registered telephone number having a largest digit number continuously matched with an incoming international telephone number as a matched telephone number are suggested (refer to Patent Literature 1).

### Citation List

### Patent Literature

Patent Literature 1: Japanese Patent No. 4867027

According to the telephone number determination device and the telephone number determination method described in Patent Literature 1, because the registered telephone number having the largest digit number continuously matched with the incoming international telephone number is selected as the matched telephone number, registered information such as a full name can be displayed on the display screen in conjunction with the incoming telephone number.

However, the registered telephone number having the largest digit number continuously matched from the end is selected as the matched telephone number as described above. For this reason, the matched telephone number may be selected by partial matching, the selection may not be accurately performed, and an erroneous full name may be displayed.

US 2005/086225 A1 discloses a method for searching a directory in a mobile phone comprising a plurality of numbers to associate a received number with a stored directory entry which comprises selecting a right most digit of the received number as a current comparison digit, and comparing a current comparison digit with a corresponding digit of each of a plurality of numbers stored in the directory, selecting, as a current comparison digit, a digit to the immediate left of a previous current comparison digit, and repeating these steps until a predetermined number of digits of the received number have been compared against the plurality of numbers stored in the directory. Notably, the predetermined number of digits comprises all of the digits of the received number.

An object of the present invention is to provide an electronic device and a telephone number matching determination method that can accurately determine matching of an incoming telephone number and a registered telephone number registered on a telephone directory and select the matched registered telephone number, even when the incoming telephone number is an international telephone number.

The invention relates to an electronic device and a method according to the independent claims 1 and 5, preferred forms being set out in the dependent claims 2-4.

### Brief Description of Drawings

FIG. 1 is a block diagram illustrating a configuration of an in-vehicle device to be an electronic device according to an embodiment of the present invention.
FIG. 2 is a (first) flowchart illustrating a processing sequence by a processing unit of the in-vehicle device to be the electronic device according to the embodiment of the present invention.
FIG. 3 is a (second) flowchart illustrating a processing sequence by the processing unit of the in-vehicle device to be the electronic device according to the embodiment of the present invention.
FIG. 4A is a diagram illustrating an incoming telephone number incoming to a smartphone (telephone) connected wiredly to the in-vehicle device illustrated in FIG. 1 to be communicatable and a digit number thereof.
FIG. 4B is a table illustrating registered telephone numbers registered on a telephone directory stored in a storage unit illustrated in FIG. 1 and registered information registered in association with the registered telephone numbers.
FIG. 5A is a list of registered telephone numbers A including continuous numerical values of four lower digits of an incoming telephone number.
FIG. 5B is a diagram illustrating a list of front portion erasure incoming telephone numbers obtained by removing numerical values of a predetermined digit number (by an operation) of a front portion from the incoming telephone number, by a relation with the digit number of the registered telephone number A of FIG. 5A.
FIG. 6A is a diagram illustrating a comparison list of the front portion erasure incoming telephone numbers of FIG. 5B and head erasure registered telephone numbers obtained by erasing numerical values (zero) of heads of the registered telephone numbers.
FIG. 6B is a diagram illustrating the incoming telephone number and information (a name and an address) of a partner of the incoming telephone number displayed on a display unit.

Embodiments of the present invention will be described referring to the drawings.

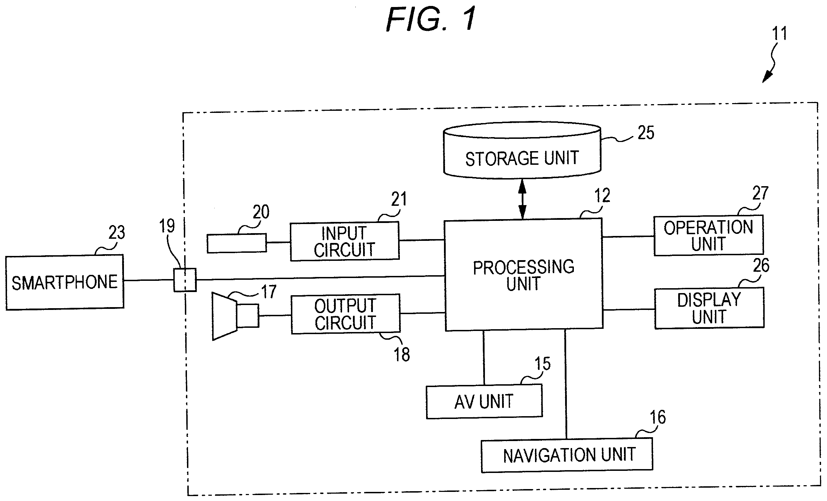

An in-vehicle device to be an electronic device according to an embodiment of the present invention is configured as illustrated in FIG. 1.

As illustrated in FIG. 1, an in-vehicle device 11 has a connector 19 for external apparatus connection and is connected wiredly to a smartphone 23 (telephone) to be communicatable via the connector 19. In this embodiment, the in-vehicle device 11 and the smartphone 23 are connected wiredly as described above. However, the in-vehicle device 11 and the smartphone 23 may be connected by near field communication (wireless LAN or the like). The in-vehicle device 11 has a processing unit 12 configured by a computer unit (including a CPU, a ROM, a RAM, an I/O interface, and a bus connecting these elements, for example). An AV unit 15 in which reproduction processing of various audio sources and video sources (for example, a CD and a DVD) is enabled and a navigation unit 16 in which a navigation of an own vehicle is enabled are connected to the processing unit 12. In addition, a speaker 17 is connected to the processing unit 12 via an output circuit 18. Thereby, audio signals according to processing by the AV unit 15 and the navigation unit 16 can be output as audio from the speaker 17 via the output circuit 18. In addition, a microphone 20 is connected to the processing unit 12 via an input circuit 21. Audio input from the microphone 20 is converted into an audio signal by the input circuit 21 and the audio signal is input to the processing unit 12. A telephone call with the outside using the smartphone 23 can be performed in a hands-free way in the in-vehicle device 11 by the microphone 20 and the speaker 17.

A storage unit 25 (for example, a hard disk or a semiconductor memory such as a flash memory) that stores various information such as music information and map information used in the AV unit 15 and the navigation unit 16, a display unit 26 that is configured by an LCD and displays video according to various processing, and an operation unit 27 that is formed on the display unit 26 in a format of a touch panel and can input an instruction necessary for the various processing are connected to the processing unit 12. As described below, a telephone directory (registered telephone numbers and registered information) which telephone numbers and information (registered information: a full name, a name, and an address) associated with the telephone numbers are associated with each other is stored in the storage unit 25. In addition, in the case in which an incoming telephone number incoming to the smartphone 23 is displayed on the display unit 26, when the incoming telephone number is matched with a compared registered telephone number as described below, the registered information associated with the registered telephone number is displayed on the display unit 26 in conjunction with the registered telephone number.

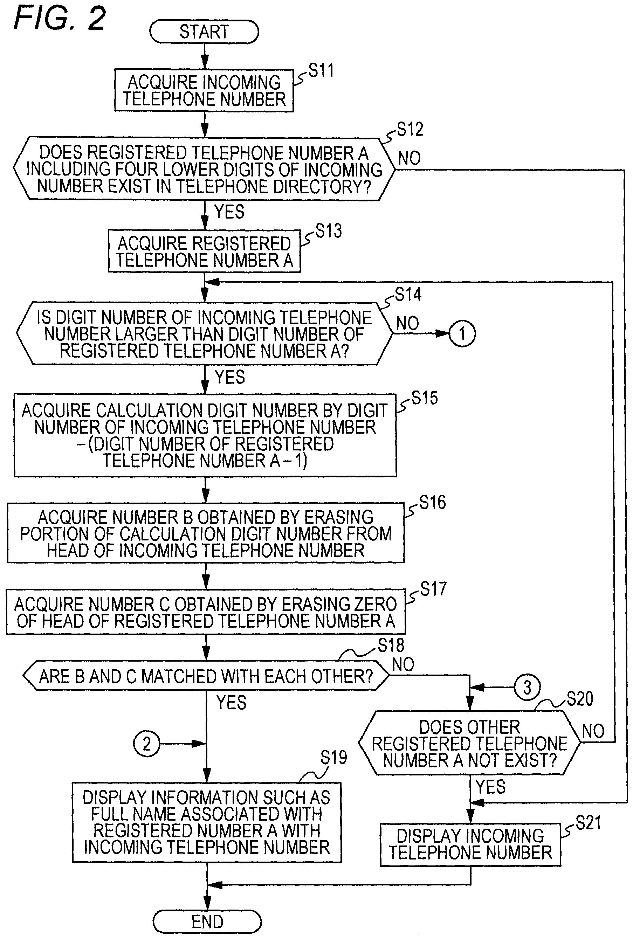

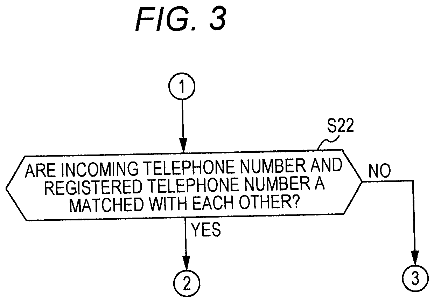

As described above, in the in-vehicle device 11 (electronic device) to which the smartphone 23 is connected to be communicatable, processing is executed according to sequences illustrated in FIGS. 2 and 3. In this embodiment, the case in which a telephone call incoming to the smartphone 23 is an international telephone call will be described.

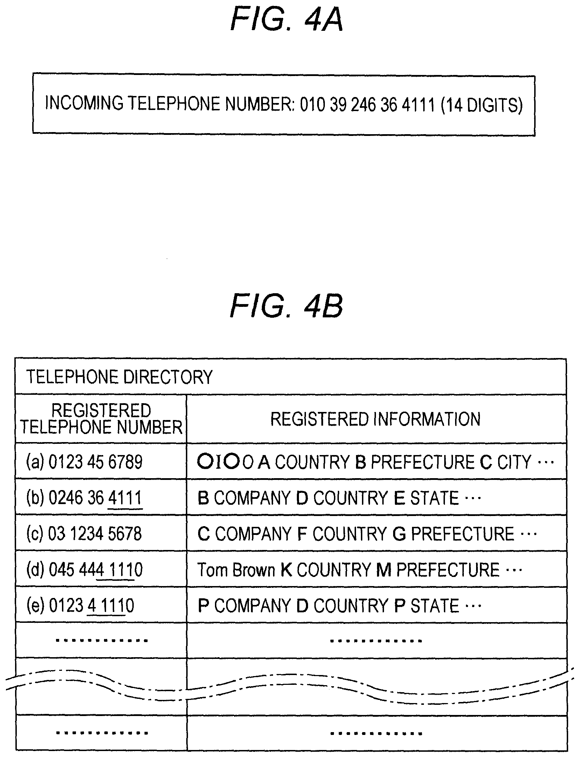

As illustrated in FIG. 2, when the telephone call incomes to the smartphone 23, the processing unit 12 acquires an incoming telephone number (refer to FIG. 4A) from the smartphone 23 and stores the incoming telephone number in a memory (not illustrated in the drawings) of the processing unit 12 or the storage unit 25 (S11). As illustrated in FIG. 4A, the incoming telephone number is an international telephone number and an international number "010 39" (including a country number, an international telephone identification number, and an international telephone company number) is added to a front portion of a telephone number obtained by removing "0 (zero)" of a head of an original telephone number ("0246 36 4111" including a long-distance number). The incoming telephone number is configured by a sequence of 14 digits of "010 39 246 36 4111".

After the processing unit 12 acquires the incoming telephone number incoming to the smartphone 23, the processing unit 12 searches whether a registered telephone number A including a continuous sequence "4111" of four lower digits of the incoming telephone number exists, from a list of registered telephone numbers listed in the telephone directory (refer to FIG. 4B) of the storage unit 25 (S12). As illustrated in FIG. 4B, in the telephone directory stored in the storage unit 25, the registered telephone numbers and registered information such as full names, names, and addresses of users of the registered telephone numbers are associated and are registered. The registered information illustrated in FIG. 4B is exemplary and predetermined information (e-mail addresses and FAX numbers) can be further registered.

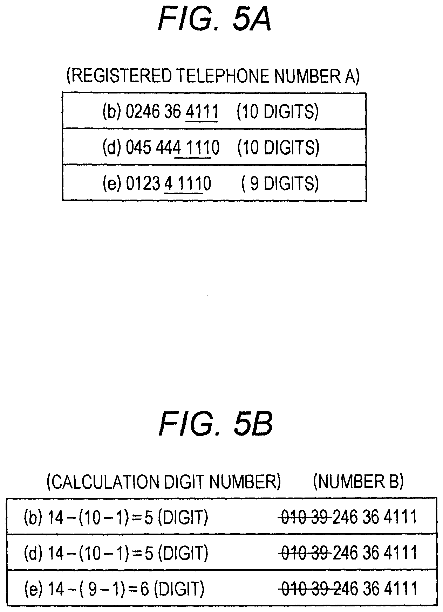

As described above, the processing unit 12 searches whether the registered telephone number A including the numbers "4111" of the four lower digits of the incoming telephone number exists, from the telephone directory. When the registered telephone number A exists (YES of S12), the processing unit 12 stores the extracted registered telephone number A in the memory (not illustrated in the drawings) of the processing unit 12 or the storage unit 25 to acquire the registered telephone number A (S13). As illustrated in FIGS. 4B and 5A, "(b) 0246 36 4111", "(d) 045 444 1110", and "(e) 0123 4 1110" of the telephone directory including the sequence "4111" of the four lower digits correspond to registered telephone numbers corresponding to the registered telephone number A. As such, acquiring the registered telephone number A including the sequence "4111" of the four lower digits of the incoming telephone number from the telephone directory is to narrow determination targets previously to execute a determination of matching/mismatching of the telephone numbers as describe below and is effective to when a large amount of telephone numbers are registered on the telephone directory in particular. When the number of registered telephone numbers is small, acquisition by the search of the registered telephone number A may be omitted and matching/mismatching of all of the registered telephone numbers and the incoming telephone number may be determined. When the registered telephone number including the sequence "4111" of the four lower digits is not registered on the telephone directory (NO of S12), corresponding registered information does not exist. For this reason, the processing unit 12 displays only the incoming telephone number on the display unit 26 (S21).

Next, the processing unit 12 determines whether a digit number of the incoming telephone number is larger than a digit number of the registered telephone number A (registered telephone number including the sequence of the four lower digits of the incoming telephone number) by comparison (SI4: digit number comparison/determination means). When the incoming telephone number is an international telephone number, a sequence such as the international number is added to a front portion of a telephone number obtained by erasing a numerical value "0 (zero)" of a head of an original telephone number (including a long-distance number). For this reason, the digit number of the incoming telephone number by the international telephone call becomes larger than the digit number of the corresponding registered telephone number. As illustrated in FIG. 4A, the incoming telephone number "010 39 246 36 4111" of the international telephone call is a telephone number obtained by adding "010 39" to be the international number to the front portion of the telephone number obtained by erasing the numerical value "0 (zero)" of the head of the registered telephone number "(b) 0246 36 4111" as described below. Therefore, at the time of determining whether the incoming telephone number "010 39 246 36 4111" of the international telephone call is matched with the registered telephone number "(b) 0246 36 4111", because the digit numbers are different and the numerical value "0 (zero)" of the head is removed, it is difficult to determine matching by comparison in this state.

When the digit number of the incoming telephone number is not larger than the digit number of the registered telephone number A (NO of S14), that is, the digit number of the incoming telephone number is equal to or smaller than the digit number of the registered telephone number A, it is thought that the incoming telephone call is not the international telephone call and the digit number of the incoming telephone number is equal to the digit number of the registered telephone number A. For this reason, the processing unit 12 directly determines whether the incoming telephone number and the registered telephone number A are matched or mismatched (S22: number determination means). When the incoming telephone number and the registered telephone number A are matched (YES of S22), the processing unit 12 displays the registered information (the full name, the name, and the address) corresponding to the registered telephone number A described in the telephone directory on the display unit 26 in conjunction with the incoming telephone number (S19: display control means). In addition, when the incoming telephone number and the registered telephone number A are not matched (NO of S22), the processing unit 12 displays the incoming telephone number on the display unit 26 (S21).

When it is determined that the digit number of the incoming telephone number is larger than the digit number of the registered telephone number A (YES of S14), the processing unit 12 acquires a calculation digit number by "digit number of incoming telephone number - (digit number of registered telephone number - 1) to be an operation expression (S15) and acquires a number B (front portion erasure incoming telephone number) obtained by erasing a portion corresponding to the calculation digit number from the head of the incoming telephone number (S16: acquisition means). As illustrated in FIGS. 5A and 5B, because the digit number of the registered telephone number A is 10 of "(b) 0246 36 4111" and the digit number of the incoming telephone number is 14 of "010 39 246 36 4111", the operation becomes "14 - (10 - 1) = 5 (digit number)" and the number B (front portion erasure incoming telephone number) "246 4111" is acquired by removing the portion of the five digits (five upper digits) "010 39" of the front portion of the international telephone number. With respect to "(d) 045 444 1110 (ten digits)" and "(e) 0123 4 1110 (nine digits)" to be the other registered telephone numbers A, as illustrated in FIG. 5B, "246 4111" and "46 4111" are acquired as numbers B (front portion erasure incoming telephone numbers) by the same operation. To reduce 1 in parentheses in the operation expression "digit number of incoming telephone number - (digit number of registered telephone number - 1) is because the international number is added after removing the head "0 (zero)" of the telephone number (registered telephone number) including the long-distance number from the international telephone number and a determination target of matching/mismatching is set as a portion other than the head "0 (zero)" of the registered telephone number (including the long-distance number).

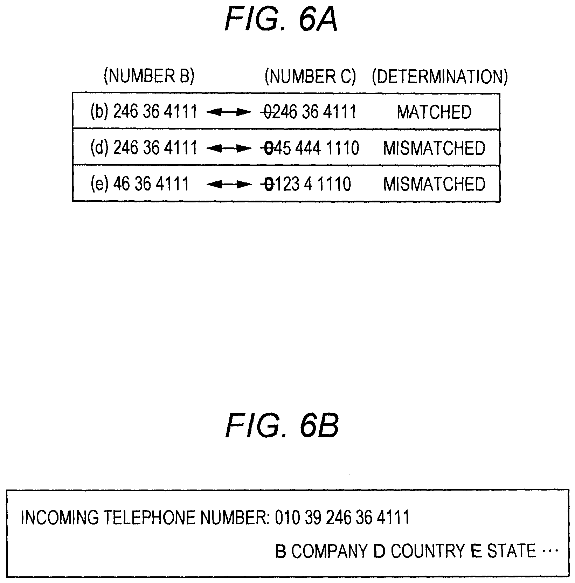

As described above, the processing unit 12 acquires a number C (head erasure registered telephone number) other than "0 (zero)" of the head of the registered telephone number A as the determination target of the matching/mismatching (S17: acquisition means) and determines whether the number B (front portion erasure incoming telephone number) and the number C (head erasure registered telephone number) are matched (S18: number determination means), as illustrated in FIG. 6A. As described above, the determination of the matching/mismatching becomes a determination on whether the number C (head erasure registered telephone number) composed of the remaining sequence other than "0 (zero)" of the head of the registered telephone number and the number B (front portion erasure incoming telephone number) obtained by erasing the sequence of the predetermined digit number of the front portion of the incoming telephone number to become the digit number equal to the digit number of the number C are equal to each other.

When it is determined whether the number B (front portion erasure incoming telephone number) and the number C (head erasure registered telephone number) are matched (YES of S18), the processing unit 12 displays the registered information (the full name, the name, and the address) associated with the registered telephone number A obtained by adding a numerical value "0 (zero)" to the head of the number C determined as matching, on the display unit 26, in conjunction with the incoming telephone number to be the sequence of the number B (S19: display control means). As a result, even in the case of the international telephone call, matching with the registered telephone number of the telephone directory can be determined and the full name of the registered information associated with the registered telephone number can be displayed in conjunction with the incoming telephone number. Therefore, a partner of the international telephone number can be confirmed. As illustrated in FIG. 6B, the incoming telephone number "010 39 246 4111" is a telephone number obtained by adding the international number "010 39" to the front portion after removing the head "0 (zero)" of the registered number "0246 36 4111". However, as described above, because the matching can be determined, the name and the address of the registered information associated with the registered telephone number in the telephone directory can be displayed on the display unit 13 in conjunction with the incoming number and information of the partner side of the incoming telephone call can be acquired.

In addition, when it is determined whether the number B (front portion erasure incoming telephone number) and the number C (head erasure registered telephone number) are not matched (NO of S18), the processing unit 12 determines whether other registered telephone number A does not exist (S20). When it is determined that other registered telephone number A becoming the determination target of the matching/mismatching does not exist (YES of S20), the processing unit 12 displays the incoming telephone number on the display unit 26. When it is determined that other registered telephone number A exists, as described above, the processing unit 12 determines whether the digit number of the incoming telephone number is larger than the digit number of the registered telephone number A (S14), acquires the number B and the number C, and executes the determination of the matching/mismatching (S16 to S18).

As such, according to the in-vehicle device 11 (electronic device) according to this embodiment, even though the digit number of the incoming telephone number of the international telephone call is different from the digit number of the registered telephone number of the telephone directory, matching thereof can be determined. Therefore, the registered information such as the full name associated with the registered telephone number of the telephone directory can be displayed in conjunction with the incoming telephone number of the international telephone call. As described above, in this embodiment, the telephone connected to the in-vehicle device 11 to be the electronic device is the smartphone 23. However, the telephone is not limited thereto and may be other mobile phone or a fixed-line telephone. In addition, in this embodiment, the electronic device is the in-vehicle device. However, the electronic device can be provided to be integrated with the telephone.

As described above, according to the present invention, when it is determined that the digit number of the incoming telephone number is larger than the digit number of the registered telephone number, the head erasure registered telephone number obtained by erasing the zero to be the numerical value of the head of the registered telephone number and the front portion erasure incoming telephone number obtained by erasing the portion of the numerical values of the predetermined digit number of the front portion of the incoming telephone number to equalize the digit number to the digit number of the head erasure registered telephone number are acquired. When it is determined that the head erasure registered telephone number and the front portion erasure incoming telephone number are matched, the predetermined information registered in association with the registered telephone number can be displayed in conjunction with the incoming telephone number. Therefore, the present invention is effective as an electronic device and a telephone number matching determination method that display the predetermined information associated with the registered telephone number in conjunction with the incoming telephone number, when the registered telephone number registered on the telephone directory and the incoming telephone number are matched.

### Reference Signs List

- 11: in-vehicle device (electronic device)
- 12: processing unit
- 15: AV unit
- 16: navigation unit
- 17: speaker
- 18: output circuit
- 19: connector
- 20: microphone
- 21: input circuit
- 23: smartphone (telephone device)
- 25: storage unit
- 26: display unit
- 27: operation unit

## Claims

1. An electronic device (11) that has a storage unit (25) configured to store a telephone directory in which telephone numbers and predetermined information associated with the telephone numbers are associated and registered and a display unit (26) configured to display an incoming telephone number incoming to a telephone (23), wherein the electronic device (11) is connected to the telephone (23) by wired or wireless communication, and to display the predetermined information associated with a registered telephone number registered on the telephone directory in conjunction with the incoming telephone number, when the registered telephone number and the incoming telephone number are matched,
**characterized in that** the electronic device (11) includes a digit number comparison/determination means for comparing/determining a digit number of the incoming telephone number and a digit number of the registered telephone number, an acquisition means for acquiring, when the digit number comparison/determination means determines that the digit number of the incoming telephone number is larger than the digit number of the registered telephone number, a head erasure registered telephone number obtained by erasing zero of a head of the registered telephone number and a front portion erasure incoming telephone number obtained by erasing a sequence of a predetermined digit number of a front portion of the incoming telephone number to equalize a digit number thereof to a digit number of the head erasure registered telephone number, a number determination means for determining matching/mismatching of the head erasure registered telephone number and the front portion erasure incoming telephone number acquired by the acquisition means, and a display control means for displaying the predetermined information registered in association with the registered telephone number in conjunction with the incoming telephone number, when the number determination means determines that the numbers are matched.

2. The electronic device (11) according to claim 1, **characterized in that**, when it is determined by the digit number comparison/determination means that the digit number of the incoming telephone number is equal to or smaller than the digit number of the registered telephone number, the number determination means is configured to determine whether the incoming telephone number and the registered telephone number are matched or mismatched and when the number determination means determines that the numbers are matched, the display control means is configured to display the predetermined information registered in association with the registered telephone number in conjunction with the incoming telephone number.

3. The electronic device (11) according to claim 1 or 2, **characterized in that**, when there is no determination of matching by the number determination means, the display control means is configured to display the incoming telephone number on the display unit (26).

4. The electronic device (11) according to one of claims 1-3, **characterized in that** the predetermined information associated with the telephone number includes any one of a full name, a name, and an address specified by the telephone number.

5. A telephone number matching determination method of an incoming telephone number and a registered telephone number registered on a telephone directory, **characterised in that** the telephone number matching determination method includes a digit number comparison/determination step of comparing/determining a digit number of the incoming telephone number and a digit number of the registered telephone number, an acquisition step of acquiring a head erasure registered telephone number obtained by erasing zero of a head of the registered telephone number and a front portion erasure incoming telephone number obtained by erasing a sequence of a predetermined digit number of the incoming telephone number to equalize a digit number thereof to a digit number of the head erasure registered telephone number, when it is determined in the digit number comparison/determination step that the digit number of the incoming telephone number is larger than the digit number of the registered telephone number, a number determination step of determining matching/mismatching of the head erasure registered telephone number and the front portion erasure incoming telephone number, and a display step of displaying the predetermined information registered in association with the registered telephone number in conjunction with the incoming telephone number, when it is determined in the number determination step that the numbers are matched.

## Patentansprüche

1. Elektronische Vorrichtung (11) mit einer Speichereinheit (25), die zum Speichern eines Telefonverzeichnisses ausgebildet ist, in dem Telefonnummern und den Telefonnummern zugeordnete, vorbestimmte Informationen zugeordnet und registriert sind, und mit einer Anzeigeeinheit (26), die dazu ausgebildet ist, eine eingehende Telefonnummer anzuzeigen, die an einem Telefon (23) eingeht, wobei die elektronische Vorrichtung (11) mit dem Telefon (13) durch eine drahtgebundene oder drahtlose Kommunikation verbunden ist, sowie dazu ausgebildet ist, die vorbestimmte Information, die einer registrierten Telefonnummer zugeordnet ist, die in dem Telefonverzeichnis registriert ist, in Verbindung mit der eingehenden Telefonnummer anzuzeigen, wenn die registrierte Telefonnummer und die eingehende Telefonnummer übereinstimmen,
**dadurch gekennzeichnet, dass** die elektronische Vorrichtung (11) aufweist: eine Stellenanzahl-Vergleichs-/Feststellungseinrichtung zum Vergleichen/Feststellen einer Stellenanzahl der eingehenden Telefonnummer und einer Stellenanzahl der registrierten Telefonnummer, eine Ermittlungseinrichtung, um dann, wenn die Stellenanzahl-Vergleichs-/Feststellungseinrichtung feststellt, dass die Stellenanzahl der eingehenden Telefonnummer größer ist als die Stellenanzahl der registrierten Telefonnummer, eine registrierte Telefonnummer mit Kopflöschung zu ermitteln, die man durch Löschen von Null von einem Kopf der registrierten Telefonnummer erhält, sowie eine eingehende Telefonnummer mit Vorderbereichslöschung zu ermitteln, die man durch Löschen einer Abfolge einer vorbestimmten Stellenanzahl eines vorderen Bereichs der eingehenden Telefonnummer erhält, um dadurch eine Stellenanzahl derselben mit einer Stellenanzahl der registrierten Telefonnummer mit Kopflöschung gleich zu machen, eine Nummernfeststellungseinrichtung zum Feststellen einer Übereinstimmung/Nichtübereinstimmung der registrierten Telefonnummer mit Kopflöschung und der eingehenden Telefonnummer mit Vorderbereichslöschung, die von der Ermittlungseinrichtung ermittelt worden sind, und eine Anzeigesteuereinrichtung zum Anzeigen der vorbestimmen Information, die in Zuordnung zu der der registrierten Telefonnummer registriert ist, in Verbindung mit der eingehenden Telefonnummer, wenn die Nummernfeststellungseinrichtung feststellt, dass die Nummern übereinstimmen.

2. Elektronische Vorrichtung (11) nach Anspruch 1,
**dadurch gekennzeichnet, dass** dann, wenn durch die Stellenanzahl-Vergleichs-/Feststellungseinrichtung festgestellt wird, dass die Stellenanzahl der eingehenden Telefonnummer gleich der oder kleiner als die Stellenanzahl der registrierten Telefonnummer ist, die Nummernfeststellungseinrichtung dazu ausgebildet ist, festzustellen, ob die eingehende Telefonnummer und die registrierte Telefonnummer übereinstimmen oder nicht übereinstimmen, und wenn die Nummernfeststellungseinrichtung feststellt, dass die Nummern übereinstimmen, die Anzeigesteuereinrichtung dazu ausgebildet ist, die vorbestimmte Information, die in Zuordnung zu der registrierten Telefonnummer registriert ist, in Verbindung mit der eingehenden Telefonnummer anzuzeigen.

3. Elektronische Vorrichtung (11) nach Anspruch 1 oder 2,
**dadurch gekennzeichnet, dass** dann, wenn keine Übereinstimmungsfeststellung durch die Nummernfeststellungseinrichtung vorliegt, die Anzeigesteuereinrichtung dazu ausgebildet ist, die eingehende Telefonnummer auf der Anzeigeeinheit (26) anzuzeigen.

4. Elektronische Vorrichtung (11) nach einem der Ansprüche 1 bis 3,
**dadurch gekennzeichnet, dass** die der Telefonnummer zugeordnete vorbestimmte Information einen vollständigen Namen, einen Namen oder eine durch die Telefonnummer spezifizierte Adresse beinhaltet.

5. Verfahren zum Feststellen einer Telefonnummernübereinstimmung einer eingehenden Telefonnummer und einer registrierten Telefonnummer, die in einem Telefonverzeichnis registriert ist,
**dadurch gekennzeichnet,**
**dass** das Verfahren zum Feststellen einer Telefonnummernübereinstimmung beinhaltet: einen Stellenanzahl-Vergleichs-/Feststellungsschritt zum Vergleichen/Feststellen einer Stellenanzahl der eingehenden Telefonnummer und einer Stellenanzahl der registrierten Telefonnummer, einen Ermittlungsschritt zum Ermitteln einer registrierten Telefonnummer mit Kopflöschung, die man durch Löschen von Null von einem Kopf der registrierten Telefonnummer erhält, sowie einer eingehenden Telefonnummer mit Vorderbereichslöschung, die man durch Löschen einer Abfolge einer vorbestimmten Stellenanzahl der eingehenden Telefonnummer erhält, um dadurch eine Stellenanzahl derselben mit einer Stellenanzahl der registrierten Telefonnummer mit Kopflöschung gleich zu machen, wenn in dem Stellenanzahl-Vergleichs-/Feststellungsschritt festgestellt wird, dass die Stellenanzahl der eingehenden Telefonnummer größer ist als die Stellenanzahl der registrierten Telefonnummer, einen Nummernfeststellungsschritt zum Feststellen einer Übereinstimmung/Nichtübereinstimmung der registrierten Telefonnummer mit Kopflöschung und der eingehenden Telefonnummer mit Vorderbereichslöschung, sowie einen Anzeigeschritt zum Anzeigen der vorbestimmen Information, die in Zuordnung zu der der registrierten Telefonnummer registriert ist, in Verbindung mit der eingehenden Telefonnummer, wenn in dem Nummernfeststellungsschritt festgestellt wird, dass die Nummern übereinstimmen.

## Revendications

1. Dispositif électronique (11) qui possède une unité de mise en mémoire (25) configurée pour la mise en mémoire d'un répertoire téléphonique dans lequel des numéros de téléphone et des informations prédéterminées associées au numéro de téléphone sont associées et sont enregistrées et une unité d'affichage (26) configurée pour afficher un numéro de téléphone entrant qui entre dans un téléphone (23), dans lequel le dispositif électronique (11) est raccordé au téléphone (23) via une communication de type câblé ou de type sans fil, et pour afficher les informations prédéterminées associées à un numéro de téléphone enregistré qui est enregistré dans le répertoire téléphonique de manière conjointe avec le numéro de téléphone entrant, dans le cas d'une adéquation entre le numéro de téléphone enregistré et le numéro de téléphone entrant, **caractérisé en ce que** le dispositif électronique (11) englobe un moyen de comparaison/détermination d'un nombre de chiffres destiné à la comparaison/détermination d'un nombre de chiffres du numéro de téléphone entrant et d'un nombre de chiffres du numéro de téléphone enregistré, un moyen d'acquisition destiné à l'acquisition, lorsque le moyen de comparaison/détermination du nombre de chiffres détermine que le nombre de chiffres du numéro de téléphone entrant est supérieur au nombre de chiffres du numéro de téléphone enregistré, d'un numéro de téléphone enregistré du type à effacement de tête que l'on obtient en effaçant un zéro des chiffres de tête du numéro de téléphone enregistré et d'un numéro de téléphone entrant du type à effacement de la portion antérieure que l'on obtient en effaçant une séquence d'un nombre de chiffres prédéterminé d'une portion antérieure du numéro de téléphone entrant afin de rendre son nombre de chiffres égal à un nombre de chiffres du numéro de téléphone enregistré du type à effacement de tête, un moyen de détermination de numéro destiné à la détermination d'une adéquation/inadéquation entre le numéro de téléphone enregistré du type à effacement de tête et le numéro de téléphone entrant du type à effacement de la portion antérieure, qui a été acquis par le moyen d'acquisition, et un moyen de commande d'affichage destiné à l'affichage des informations prédéterminées enregistrées en association avec le numéro de téléphone enregistré de manière conjointe avec le numéro de téléphone entrant, lorsque le moyen de détermination du numéro détermine une adéquation entre les numéros.

2. Dispositif électronique (11) selon la revendication 1, **caractérisé en ce que**, lorsque le moyen de comparaison/détermination du nombre de chiffres détermine que le nombre de chiffres du numéro de téléphone entrant est égal ou inférieur au nombre de chiffres du numéro de téléphone enregistré, le moyen de détermination du numéro est configuré pour déterminer le fait de savoir s'il y a adéquation ou inadéquation entre le numéro de téléphone entrant et le numéro de téléphone enregistré, et lorsque le moyen de détermination du numéro détermine une adéquation entre les numéros, le moyen de commande d'affichage est configuré pour afficher les informations prédéterminées enregistrées en association avec le numéro de téléphone enregistré de manière conjointe avec le numéro de téléphone entrant.

3. Dispositif électronique (11) selon la revendication 1 ou 2, **caractérisé en ce que**, en l'absence d'une détermination d'une adéquation par l'intermédiaire du moyen de détermination du numéro, le moyen de commande de l'affichage est configuré pour afficher le numéro de téléphone entrant sur l'unité d'affichage (26).

4. Dispositif électronique (11) selon l'une quelconque des revendications 1 à 3, **caractérisé en ce que** les informations prédéterminées associées au numéro de téléphone englobent n'importe quelle information choisie parmi un nom complet, un nom et une adresse spécifiés par le numéro de téléphone.

5. Procédé de détermination d'une adéquation entre des numéros de téléphone concernant un numéro de téléphone entrant et un numéro de téléphone enregistré, qui est enregistré dans un répertoire téléphonique, **caractérisé en ce que** le procédé de détermination d'une adéquation entre des numéros de téléphone englobe une étape de comparaison/détermination d'un nombre de chiffres destinée à la comparaison/détermination d'un nombre de chiffres du numéro de téléphone entrant et d'un nombre de chiffres du numéro de téléphone enregistré, une étape d'acquisition destinée à l'acquisition d'un numéro de téléphone enregistré du type à effacement de tête que l'on obtient en effaçant un zéro des chiffres de tête du numéro de téléphone enregistré et d'un numéro de téléphone entrant du type à effacement de la portion antérieure que l'on obtient en effaçant une séquence d'un nombre de chiffres prédéterminé du numéro de téléphone entrant afin de rendre son nombre de chiffres égal à un nombre de chiffres du numéro de téléphone enregistré du type à effacement de tête, lorsqu'il est déterminé à l'étape de comparaison/détermination d'un nombre de chiffres que le nombre de chiffres du numéro de téléphone entrant est supérieur au nombre de chiffres du numéro de téléphone enregistré, une étape de détermination du numéro destinée à déterminer une adéquation/inadéquation entre le numéro de téléphone enregistré du type à effacement de tête et le numéro de téléphone entrant du type à effacement de la portion antérieure, et une étape d'affichage destinée à l'affichage des informations prédéterminées enregistrées en association avec le numéro de téléphone enregistré de manière conjointe avec le numéro de téléphone entrant, lorsqu'il est déterminé, à l'étape de détermination du numéro, une adéquation entre les numéros.
